Europäisches Patentamt

European Patent Office

Office européen des brevets

(19)

(11) EP 0 996 602 B1

## (12) EUROPEAN PATENT SPECIFICATION

(45) Date of publication and mention
of the grant of the patent:
**09.10.2002 Bulletin 2002/41**

(21) Application number: **98923206.1**

(22) Date of filing: **12.05.1998**

(51) Int Cl.⁷: **C04B 41/48**, C04B 26/06,
B44F 9/04, E04F 13/02

(86) International application number:
**PCT/NL98/00268**

(87) International publication number:
**WO 98/051642 (19.11.1998 Gazette 1998/46)**

(54) **PROCESS FOR COATING A SURFACE WITH A LAYER CONTAINING A STONE PATTERN**

VERFAHREN ZUM BESCHICHTEN EINER OBERFLÄCHE MIT EINER SCHICHT, DIE EIN STEINMUSTER AUFWEIST

PROCEDE DE REVETEMENT D'UNE SURFACE AVEC UNE COUCHE CONTENANT UNE COMPOSITION DE PIERRE

(84) Designated Contracting States:
**AT BE CH DE ES FR GB IT LI NL PT**

(30) Priority: **16.05.1997 NL 1006068**

(43) Date of publication of application:
**03.05.2000 Bulletin 2000/18**

(73) Proprietor: **Van Troost, Ronny Oscar Henri
6343 BA Klimmen (NL)**

(72) Inventor: **Van Troost, Ronny Oscar Henri
6343 BA Klimmen (NL)**

(74) Representative:
**Van kan, Johan Joseph Hubert, Ir. et al
Algemeen Octrooibureau
P.O. Box 645
5600 AP Eindhoven (NL)**

(56) References cited:
EP-A- 0 256 144          US-A- 4 721 634
US-A- 4 851 456          US-A- 4 868 018
US-A- 4 906 726          US-A- 5 447 752

## Description

The invention relates to a process for coating a surface with a layer containing a stone pattern, in which a layer of mortar is applied to the surface, which mortar contains sand and/or gravel, binders and water, and in which a stone pattern is subsequently created in the layer.

Such a process is known from the Dutch patent application No. 8801023.

The aforementioned patent application describes a process for coating a surface with a layer containing a stone pattern involving the use of a mortar that contains as binders 4-10 parts of a synthetic resin dispersion and 0-5 parts of cement per 100 parts of sand and/or gravel.

A problem with the known process is that the creation of the stone pattern does not proceed as desired. Usually a stone pattern is created by cutting joints, for example in the form of a brick masonry pattern. However, when the joints are being cut, parts of the remaining layer regularly break away, especially at the points where two joints intersect. This leads to the formation of an unacceptable, irregular pattern. It is often even necessary to coat the surface with a new layer of mortar and to create a new stone pattern in it.

The invention aims to provide a process that does not present the aforementioned drawback.

This aim is surprisingly achieved because in the process according to the invention use is made of a mortar that contains as binders x parts by weight of synthetic resin and y parts by weight of cement per 100 parts by weight of sand and/or gravel, with

$$y = -20.x + b$$

and with

    y being at least 10,
    x being at least 0.5
    and b having a value of between 40 and 90.

Preferably, b has a value of between 42 and 80, more preferably between 45 and 70.

With the process according to the invention the stone pattern can be created without any, or at least with practically no parts breaking away from the layer.

A further advantage of the process according to the invention is that, if a brick masonry pattern is created, the appearance of the ultimate layer very closely approximates that of brick masonry.

A further advantage is that it is well possible to drill holes into the layer, in set condition, and the underlying substrate with the aid of a drilling machine, without this resulting in the layer crumbling away or being otherwise damaged.

The process according to the invention can be used to coat surfaces of various substrates with layers with different stone patterns. It is for example well possible to coat inside walls, outside walls, partitions, etc. Examples of suitable substrates are stone, concrete, wood, fibreboard, polystyrene foam and other stiff insulation materials and plaster.

It is also well possible to coat not only substrates with only a smooth surface, but also substrates with complex surfaces, such as surfaces curved once or twice, multi-surfaces, such as, for example, stepped surfaces, etc.

The surface to be coated can be cleaned, for example with a degreasing agent and/or water.

The surface to be coated can be pretreated in the manner known to a person skilled in the art, depending on the nature of the substrate. The surface of a porous substrate can for example be impregnated with a synthetic resin to reduce the surface's absorption capacity. The surface can also be pretreated with an adhesive. It is also possible that the surface is not pretreated at all.

The mortar that is used in the process according to the invention contains sand and/or gravel. The amounts and the types of sand and gravel chosen depend on for example the stone pattern that is to be obtained. It is possible to use mixtures of sand with different particle sizes. It is for example possible to use a mixture of masonry sand and very fine quartz sand, which has a favourable effect on the mortar's processability. The employed sand preferably has a particle size of up to 3 mm. The particle size of the employed gravel is preferably less than 10 mm, even more preferably less than 5 mm.

The amount of water employed is usually adapted just before the mortar is applied, so that the best possible processability of the mortar is obtained. If the mortar is too dry, it is not well possible to distribute the mortar across the surface in a homogeneous layer. If the mortar is too wet, there will be the problem of the mortar sagging, especially on vertical surfaces.

A synthetic resin and cement are used as binders. The synthetic resin is preferably in the form of an emulsion in water, so that the synthetic resin can be easily mixed with the mortar's other components using the usual processes and equipment for the preparation of mortars.

The emulsion preferably contains 40-60 parts by weight of the synthetic resin and 60-40 parts by weight of water.

Good results are achieved if an acrylate polymer is used as the synthetic resin.

Preferably, at least 1.0 part by weight of synthetic resin and at least 15 parts by weight of cement are used in the mortar.

Preferably, the mortar contains one or more pigments, for example cement pigments. It is possible that the ultimate layer with the stone pattern has virtually any desired colour, so that it is possible to imitate all kinds of stone surfaces as faithfully as possible.

The mortar is usually applied in a layer thickness of 5-10 mm, preferably with the aid of the known techniques for applying decorative plaster.

Immediately after the layer has been applied, or after a short waiting time, the stone pattern is created in the layer of mortar which has not yet set. This is usually done by cutting joints into the layer to create a stone pattern, for example a pattern of brick masonry, sandlime bricks or natural stones, depending on the employed mortar and the shape and size of the joints. Preferably the joints have a depth that approximately equals half the thickness of the layer of mortar in which the stone pattern is created.

Preferably the cut joints are subsequently filled with a joint mortar. This way a very faithful imitation of a stone brickwork surface is obtained.

The joint mortar may have a composition known for joint mortar. The joint mortar may also have the composition of the mortar used for the layer containing the stone pattern, but the joint mortar then preferably has a different colour.

Example

In a concrete mixer a mortar was prepared using 15 kg of masonry sand with a particle diameter of up to 3 mm, 0.5 kg of acrylate synthetic resin emulsion containing 50 wt.% synthetic resin, 3 kg of cement, 250 g of red pigment, 125 g of mixing oil and water.

The mortar thus obtained was applied to a 20-mm-thick chipboard in a layer thickness of 10 mm with the aid of a spatula.

Next, grooves imitating the shape of joints were cut into the layer, in a brick masonry pattern. A regular pattern was obtained, and after the layer had set the grooves could be filled with a usual joint mortar.

Comparative example

In the same way as in the example a mortar was prepared that contained 15 kg of sand, 1.6 kg of the synthetic resin emulsion, 0.7 kg of cement, 250 g of red pigment and 125 g of mixing oil. In the same way as in the example a layer was applied and a stone pattern was cut into it. Approximately 7% of the bricks had an irregular shape because part of the layer of mortar had broken away at one of the corners when the joint was cut.

**Claims**

1. Process for coating a surface with a layer containing a stone pattern, in which a layer of mortar is applied to the surface, which mortar contains sand and/or gravel, binders and water, and in which a stone pattern is subsequently created in the layer, **charac-** **terized in that** use is made of a mortar that contains as binders x parts of synthetic resin and y parts of cement per 100 parts by weight of sand and/or gravel, with

$$y = -20.x + b$$

and with y being at least 10,
x being at least 0.5
and b having a value of between 40 and 90.

2. Process for coating a surface with a layer containing a stone pattern according to Claim 1, **characterized in that** b has a value of between 42 and 80.

3. Process for coating a surface with a layer containing a stone pattern according to Claim 1, **characterized in that** b has a value of between 45 and 70.

4. Process for coating a surface with a layer containing a stone pattern according to any one of Claims 1-3, **characterized in that** an acrylate polymer is used as the synthetic resin.

5. Process for coating a surface with a layer containing a stone pattern according to any one of Claims 1-4, **characterized in that** at least 1.0 part by weight of synthetic resin and at least 15 parts by weight of cement are used as binders in the mortar.

6. Process for coating a surface with a layer containing a stone pattern according to any one of Claims 1-5, **characterized in that** a brick masonry pattern is created as the stone pattern.

7. Process for coating a surface with a layer containing a stone pattern according to Claim 6, **characterized in that** the joints in the brick masonry pattern are filled.

**Patentansprüche**

1. Verfahren zur Beschichtung einer Oberfläche mit einer Schicht, die ein Steinmuster aufweist, in welchem eine Mörtelschicht auf die Oberfläche aufgebracht wird, wobei der Mörtel Sand und/oder Kies, Bindemittel und Wasser enthält und bei welchem ein Steinmuster anschließend in der Schicht erzeugt wird, **dadurch gekennzeichnet, daß** von Mörtel Gebrauch gemacht wird, welcher als Bindemittel x Teile eines synthetischen Harzes und y Teile Zement pro 100 Gewichtsteile Sand und/oder Kies enthält, wobei

$$y = -20 \cdot x + b$$

und y wenigstens 10 beträgt,
x wenigstens 0,5 beträgt
und b einen Wert zwischen 40 und 90 besitzt.

2. Verfahren zur Beschichtung einer Oberfläche mit einer Schicht, die ein Steinmuster gemäß Anspruch 1 aufweist, **dadurch gekennzeichnet, daß** b einen Wert zwischen 42 und 80 besitzt.

3. Verfahren zur Beschichtung einer Oberfläche mit einer Schicht, die ein Steinmuster gemäß Anspruch 1 aufweist, **dadurch gekennzeichnet, daß** b einen Wert zwischen 45 und 70 besitzt.

4. Verfahren zur Beschichtung einer Oberfläche mit einer Schicht, die ein Steinmuster gemäß einem der Ansprüche 1-3 aufweist, **dadurch gekennzeichnet, daß** als synthetisches Harz ein Acrylatpolymer verwendet wird.

5. Verfahren zur Beschichtung einer Oberfläche mit einer Schicht, die ein Steinmuster gemäß einem der Ansprüche 1-4 aufweist, **dadurch gekennzeichnet, daß** wenigstens 1,0 Gewichtsteile des synthetischen Harzes und wenigstens 15 Gewichtsteile Zement als Bindemittel im Mörtel verwendet werden.

6. Verfahren zur Beschichtung einer Oberfläche mit einer Schicht, die ein Steinmuster gemäß einem der Ansprüche 1-5 aufweist, **dadurch gekennzeichnet, daß** als Steinmuster das Muster eines Ziegelmauerwerks erzeugt wird.

7. Verfahren zur Beschichtung einer Oberfläche mit einer Schicht, die ein Steinmuster gemäß Anspruch 6 aufweist, **dadurch gekennzeichnet, daß** die Fugen im Muster des Ziegelmauerwerks gefüllt werden.

**Revendications**

1. Procédé de revêtement d'une surface avec une couche contenant un motif de pierre, dans laquelle une couche de mortier est appliquée sur la surface, ledit mortier contenant du sable et/ou des graviers, des liants et de l'eau et dans laquelle le motif de pierre est créé ultérieurement dans la couche, **caractérisé en ce que** l'on utilise un mortier qui contient en tant que liants x parties de résine synthétique et y parties de ciment pour 100 parties en poids de sable et/ou de graviers, avec :

$$y = -20.x + b$$

et avec y étant au moins 10,

x étant au moins 0,5
et b ayant une valeur comprise entre 40 et 90.

2. Procédé de revêtement d'une surface avec une couche contenant un motif de pierre selon la revendication 1, **caractérisé en ce que** b a une valeur comprise entre 42 et 80.

3. Procédé de revêtement d'une surface avec une couche contenant un motif de pierre selon la revendication 1, **caractérisé en ce que** b a une valeur comprise entre 45 et 70.

4. Procédé de revêtement d'une surface avec une couche contenant un motif de pierre selon l'une quelconque des revendications 1 à 3, **caractérisé en ce que** un polymère acrylique est utilisé en tant que résine synthétique.

5. Procédé de revêtement d'une surface avec une couche contenant un motif de pierre selon l'une quelconque des revendications 1 à 4, **caractérisé en ce qu'**au moins 1,0 partie en poids de résine synthétique et au moins 15 parties en poids de ciment sont utilisées en tant que liants dans le mortier.

6. Procédé de revêtement d'une surface avec une couche contenant un motif de pierre selon l'une quelconque des revendications 1 à 5, **caractérisé en ce qu'**un motif de maçonnerie de briques est créé en tant que motif de pierre.

7. Procédé de revêtement d'une surface avec une couche contenant un motif de pierre selon la revendication 6, **caractérisé en ce que** les joints dans le motif de maçonnerie de briques sont remplis.